# EUROPEAN PATENT APPLICATION

(11) **EP 2 930 629 A1**
(43) Date of publication of application: **14.10.2015**
(21) Application number: 15152679.5
(22) Date of filing: 27.01.2015
(51) Int. Cl.: G06F 17/30

(54) **Accessing non-relational data stores using structured query language queries**

(30) Priority: 10.04.2014 WO PCT/IB2014/000532
(71) Applicant: Siemens Aktiengesellschaft, 80333 München (DE)
(72) Inventor: Koka, Preeti, 560034 Bangalore, Karnataka (IN); Mohammad, Muneer Altaf, 560076 Bangalore, Karnataka (IN); Sudhakaran, Vinay, 560076 Bangalore, Karanataka (IN)
(74) Representative: Isarpatent

(57) **Abstract**

The present invention provides a method and system for accessing non-relational data stores (108) using a structured query language queries. In an embodiment, an information server (106) generates a query based on user inputs received from a client device (102). The information server (106) determines an optimal query plan for the query and generates data store interface layer (DSIL) calls using the optimal query plan. Furthermore, the information server (106) generates Application Programming Interface (API) calls specific to one or more non-relational data stores (108) based on the corresponding DSIL calls. Consequently, the information server (106) obtains result sets from the one or more non-relational data stores 108 using the associated API calls and aggregates the result sets to generate a response to the query. Moreover, the information server (106) provides the response to the query to the client device (102).

## Description

The present invention relates to the field of non-relational data store access system, and more particularly relates to accessing non-relational data stores using structured query language queries.

Typically, a structured query language (SQL) is used to store, retrieve and delete data from relational data stores. The relational data stores are based on a relational data model. In the relational data model, data is stored and accessed via "relations", which, in implementations, are in the form of tables with rows and columns. Each column contains one or more data categories and each row contains a unique instance of data for the data categories defined by the columns. For example, a typical business order entry database includes a table that described a customer with columns for name, address, phone number, and so forth and rows that contains data for name, address, phone number and so forth.

Typically, a client device sends query input data inputted by a user via an interface to an information server for accessing relational data stores. The information server generates an SQL query based on the query input data and accesses the relational data stores using the SQL query. A SQL query refers to a set of user commands generated in accordance with the SQL standard. The SQL standard has been promulgated by the International Standards Association since 1986. The SQL is an expressive query language and is widely accepted standard in the Industry. In response to the SQL query, the relational data stores return a particular result set to the information server. The information server provides the result sets to the client device in response to the query data. Generally, the relational data stores process the SQL query in a convenient manner. However, the relational data stores are not scalable.

With the advent of technology, storage model, that is used to provide a definition and format for persisting and processing large quantities, is changed while organizations prefer to use SQL standard based querying mechanism as SQL is widely accepted standard in the Industry. For example, in some application scenarios, non-relational storage model is preferred over a relational storage model as relational data stores may not be able to handle deluge of data. In a non-relational storage model, non-relational data stores are used. The non-relational data stores provide a higher scalability for storing and retrieving data as compared to the relational data stores.

When organizations employ non-relational data stores, data access layer (DAL) of existing SQL based infrastructure may not be able to communicate with the non-relational data stores as the non-relational data stores currently do not support SQL queries. For example, the non-relational data stores do not support operations such as aggregate, join, sub-queries, etc. Therefore, the organizations may not be able to make transition from the relational data stores to the non-relational data stores despite perceivable advantages of the non-relational data stores.

In light of the foregoing, there is a need for a non-relational data store access system which can allow an information server to access non-relational data stores using SQL queries.

It is therefore an object of the present invention to provide a non-relational data store access system which can access non-relational data stores such as NoSQL (Not only SQL) data stores using SQL queries.

The object of the present invention is achieved by a method of accessing non-relational data stores using structured query language (SQL) queries. The method comprises determining, by a processor, an optimal query plan for a SQL query and generating a plurality of data store interface layer (DSIL) calls based on the optimal query plan. For example, the query is a structured query language (SQL) query. The optimal query plan may include a plurality of query tokens. The method further comprises accessing one or more of the plurality of non-relational data stores based on the plurality of DSIL calls. The non-relational data stores persists data in a non-relational manner. For example, the non-relational data stores may be NoSQL data stores. Additionally, the method comprises providing results of the query obtained through accessing the one or more non-relational data stores to a client device.

Therein, in determining the optimal query plan for the query, the method comprises determining whether the optimal query plan for the query is available in a plan cache. If the optimal query plan is available for the plan cache, the method comprises obtaining the optimal query plan from the plan cache. Thus, query performance is improved as the optimal query plan is obtained from the plan cache. If the optimal query plan is not available in the plan cache, the method comprises generating the optimal query plan for the query. In an embodiment, the method comprises estimating cost of execution of the query, determining degree of consistency required for the query, and generating the optimal query plan for the query based on the cost of execution and the degree of consistency required.

Therein, in generating the plurality of DSIL calls based on the optimal query plan, the method comprises identifying query tokens from the optimal query plan and generating the plurality of DSIL calls using the identified query tokens. The method also comprises determining dependencies between the plurality of DSIL calls and generating a plurality of request pools, each request pool contains one or more DSIL calls based on the determined dependencies.

Therein, in accessing the one or more non-relational data stores, the method comprises generating application programming interface (API) calls corresponding to the one or more DSIL calls in each request pool. Each of the API calls is specific to anyone of the one or more non-relational data stores. Thus, the API calls can be executed in parallel, thereby leading to improved performance. The method further comprises accessing the one or more non-relational data stores using the respective API calls. In an embodiment, the method comprises obtaining result sets from the non-relational data stores using the respective API calls by accessing the one or more non-relational data stores.

Therein, in providing the results of the query, the method comprises collating the result sets corresponding to the one or more DSIL calls in the plurality of request pools based on the optimal query plan, and providing the collated result sets in response to the query.

The object of the present invention is also achieved by providing an apparatus comprising a processor, and a memory coupled to the processor and provided with a query bridge for accessing non-relational data stores using SQL queries. For example, the apparatus may include an information server. The query bridge comprises a query parser, query planner, a query plan translator, a data store interface layer, and a result aggregator. The query parser is configured for validating the query by parsing the query. The query planner is configured for determining an optimal query plan for the SQL query. The query plan translator is configured for generating a plurality of DSIL calls based on the optimal query plan. The data store interface layer is configured for accessing one or more non-relational data stores based on the plurality of DSIL calls.

Therein, the query planner is configured for determining whether the optimal query plan for the query is available in the plan cache. If the optimal query plan is available in the plan cache, the query planner is configured for obtaining the optimal query plan from the plan cache. If the optimal query plan is not available in the plan cache, the query planner is configured for generating the optimal query plan for the query.

Therein, the query plan translator is configured for identifying query tokens from the optimal query plan and generating the plurality of DSIL calls using the identified query tokens. The query plan translator is further configured for determining dependencies between the plurality of DSIL calls and generating a plurality of request pools. Each of the request pools contains one or more data store interface calls based on the determined dependencies.

Therein, the data store interface layer is configured for generating application programming interface (API) calls corresponding to the one or more DSIL calls in each request pool. Each of the API calls is specific to anyone of the one or more non-relational data stores. The data store interface layer is further configured for obtaining result sets from the one or more non-relational data stores using the respective API calls.

Therein, the result aggregator is configured for collating result sets corresponding to the one or more DSIL calls in each of the request pools based on the optimal query plan and providing the collated result sets in response to the query. In this manner, the query bridge enables to access the non-relational data stores such as NoSQL data stores using SQL queries. Advantageously, data access layer (DAL) in the information server need not be modified to access the non-relational data stores.

In an embodiment, the apparatus for accessing the non-relational data stores may be a computer or a information server. It is understood that the query bridge may be stored in the form of machine readable instructions in the memory which when executed by the processor cause the processor to perform the above mentioned steps. It can be noted that the query bridge may be stored on an application specific integrated circuitry.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an exemplary non-relational data store access non-relational data store access system, according to an embodiment of the present invention.
- FIG 2: illustrates a block diagram of a information server of FIG 1 capable of accessing non-relational data stores based on Structured Query Language (SQL) queries, according to an embodiment of the present invention.
- FIG 3: is a block diagram of a query bridge of FIG 1, according to an embodiment of the present invention.
- FIG 4: illustrates a block diagram of a query planner of FIG 3, according to an embodiment of the present invention.
- FIG 5: is a process flowchart illustrating an exemplary method of accessing non-relational data stores using an SQL query, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

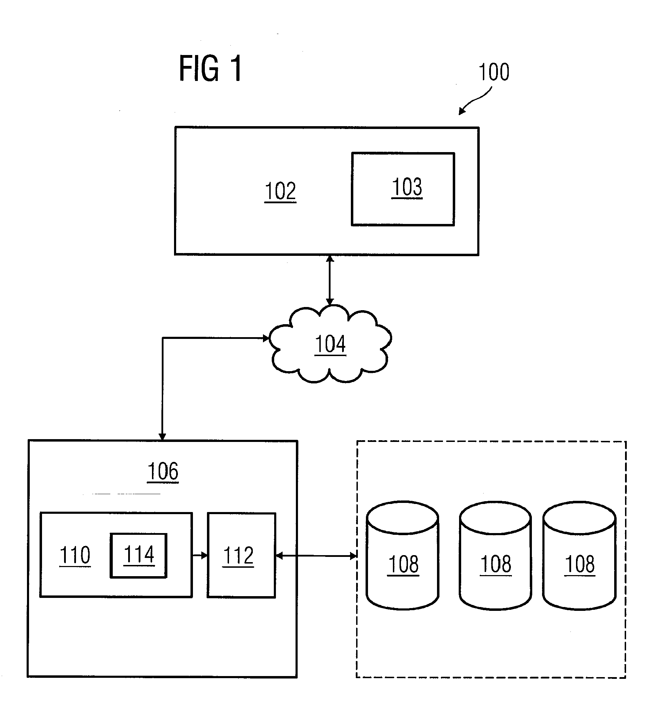

FIG 1 is a block diagram illustrating an exemplary non-relational data store access system 100, according to an embodiment of the present invention. The non-relational data store access system 100 includes a client device 102, an information server 106, and non-relational data stores 108. The client device 102 is connected to the information server 106 via a network 104. The network 104 may be Local Area Network (LAN), Wide Area Network (WAN), Personal Area Network (PAN), Wireless Local Area Network (WLAN) and the like. The information server 106 is communicatively coupled to the non-relational data stores 108 using wired or wireless network.

Although FIG 1 illustrates that a single client device (i.e., the client device 102) is connected to the information server 106, one skilled in the art will understand that many such client devices can be connected to the information server 106 for simultaneously accessing the non-relational data stores 108.

The client device 102 may be a desktop computer, a laptop computer, a tablet computer, a smart phone, a network station and the like devices. The client device 102 comprises a query interface 103 providing user inputs to generate a structured query language (SQL) query. For example, SQL query is a set of user commands generated based on user inputs according to SQL standard. Typically, SQL queries are used to access relational data stores which store data in tabular format. According to the present invention, non-relational data stores 108 are accessed using SQL queries.

The information server 106 includes a query module 110 with a data access layer 114, and a query bridge 116. The query module 112 generates a SQL query based on the user inputs received from the client device 102. The data access layer (DAL) 114 communicates the SQL query to the query bridge 112. The query bridge 112 generates Application Programming Interface (API) calls specific to each of the non-relational data stores 108 based on the SQL query. Accordingly, the query bridge 112 access one or more of the non-relational data stores 108 using the corresponding API calls and obtains results sets from the one or more non-relational data stores 108. The query bridge 112 aggregates the results sets corresponding to the SQL query and forwards the aggregated data to the query module 110 via the data access layer 114. The query module 110 provides the aggregated data as a response to the user input to the client device 102 via the network 104. In this manner, the query bridge 112 in the information server 106 accesses the non-relational data stores 108 based on a SQL query. Advantageously, the information server 106 which is based on SQL standard can access the non-relational data stores 108 such as NoSQL data stores which do not support SQL query without changing the data access layer 114. It is understood that, the information server 106 can execute multiple independent SQL queries from one or more client devices 102 in parallel. While FIG 1 illustrates that the non-relational data store access system 100 includes the non-relational data stores 108 connected to the information server 106, one can envision that the non-relational data store access system 100 can also contain relational data stores in addition to the non-relational data stores 108.

Although in FIG 1, the query bridge 112 is illustrated as an element of the information server 106, one can envision that the query bridge 112 may reside in a separate server other than the information server 106.

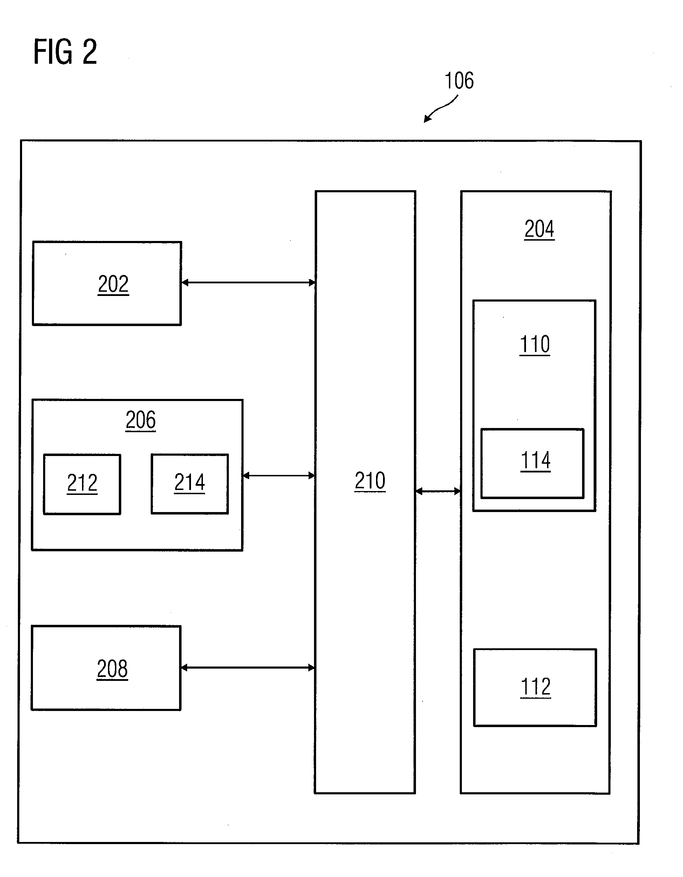

FIG 2 illustrates a block diagram of the information server 106 of FIG 1 capable of accessing the non-relational data stores 108 based on SQL queries, according to an embodiment of the present invention. In FIG 2, the computing device 200 comprises a processor 202, a memory 204, a storage unit 206, a communication interface 208, and a bus 210.

The processor 202, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 202 may also include embedded controllers, such as generic or programmable logic devices or arrays, application specific integrated circuits, single-chip computers, and the like.

The memory 204 may be volatile memory and non-volatile memory. A variety of computer-readable storage media may be stored in and accessed from the memory 204. The memory 204 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 204 includes the query module 110 containing the data access layer (DAL) 110 and the query bridge 112. The query module 110, the DAL 112 and the query bridge 112 are stored in the form of machine-readable instructions on any of the above-mentioned storage media and may be executed by the processor 202. For example, when executed by the processor 202, the query module 110 causes the processor 202 to generate a SQL query based on user inputs received from the client device 102. The query bridge 112 causes the processor 202 to determine an optimal query plan based on the SQL query and generate data store interface layer (DSIL) calls based on the query plan. Furthermore, the query bridge 112 causes the processor 202 to generate Application Programming Interface (API) calls specific to one or more non-relational data stores 108 based on the DSIL calls. Accordingly, the query bridge 112 causes the processor 202 to obtain result sets from the one or more non-relational data stores 108 using the associated API calls and aggregate the result sets to generate a response to the SQL query.

The storage unit 106 may be a non-transitory storage medium configured for storing a plan cache 212 and a data cache 214. For example, the plan cache 212 dynamically stores a plurality of query plans for frequently used SQL queries. In an exemplary embodiment, the query bridge 112 causes the processor 202 to determine whether an optimal query plan corresponding to the SQL query is present in the plan cache 212. If the plan cache 212 contains the optimal query plan for the SQL query, the processor 202 uses the optimal query plan for executing the SQL query. Advantageously, time required to generate a new query plan is saved if the optimal query plan is available in the plan cache 212. If the optimal query plan is not available in the plan cache 212, the query bridge 112 causes the processor 202 to generate a new query plan for the SQL query. The data cache 214 stores results sets for a plurality of DSIL calls associated with different SQL queries. For example, each time a SQL query is executed, the data cache 214 may store the associated result sets for future use. In an exemplary embodiment, the query bridge 112 causes the processor 202 to determine whether one or more result sets corresponding to one or more DSIL calls are stored in the data cache 214. If the results sets are stored in the data cache 214, then the processor 202 uses the results sets for preparing response to the SQL query. Advantageously, time and resources required for generating API calls specific to the one or more non-relational data stores 108 and obtaining the result sets is saved. If the result sets are not available in the data cache 214, the query bridge 112 causes the processor 202 to generate API calls specific to the one or more non-relational data stores 108 based on the corresponding DSIL calls and obtains results set using the API calls from the associated one or more non-relational data stores 108.

The communication interface 208 can be a wired or wireless interface capable of communicating with the client device 102 and the non-relational data stores 108. The communication interface 208 may support any of the well known communication protocols. The bus 210 acts as interconnect between various components 202-208 of the information server 106.

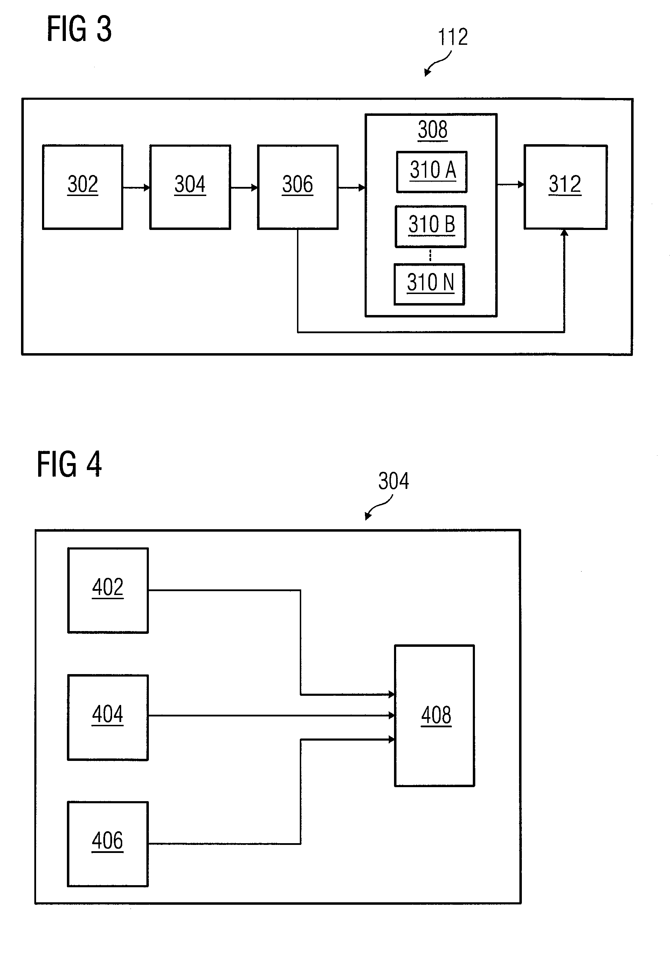

FIG 3 is a block diagram of the query bridge 112 of FIG 1, according to an embodiment of the present invention. The query bridge 112 includes a query parser 302, a query planner 304, a query translator 306, a data store interface layer (DSIL) 308, and a result aggregator 312.

When a SQL query is generated, the SQL query is queued in a query queue (not shown) maintained at the DAL 114. In an exemplary implementation, the SQL query is queued in a first-in, first-out fashion. The SQL query from the query queue is fed to the query parser 302. Accordingly, the query parser 302 validates an incoming SQL query received from the query queue. In an exemplary implementation, the query parser 302 parses the query and performs syntax checks on the parsed SQL query. If the syntax checks are successful, it implies that the SQL query is invalid. In case the SQL query is found to be invalid, an appropriate error message is provided to the client device 102.

If the syntax checks are successful, the query planner 304 determines whether the plan cache 212 contains an optimal query plan for the SQL query. If the plan cache 212 has the optimal query plan for the SQL query, then the query planner 304 provides the optimal query plan to the query plan translator 306. However, if the plan cache 212 does not contain the optimal query plan for the SQL query, then the query planner 304 generates an optimal query plan for the SQL query. It can be noted that the query planner 304 can generate the optimal query plan for the SQL query using any of query plan generation algorithms well known to the person skilled in the art. The query plan may contain one or more query tokens. Additionally, the query planner 304 stores the generated optimal query plan in the plan cache 212 for future use.

The query plan translator 306 identifies independent, intermediate query tokens from the query plan and translates each of the independent, intermediate query tokens into a plurality of data store interface layer (DSIL) calls. It can be noted that, one or more DSIL calls may be generated from a single independent, intermediate query token. The query plan translator 306 determines dependencies between the plurality of DSIL calls. For example, the query plan translator 306 determines the DSIL calls which are generated from independent intermediate query token. That is, when the DSIL calls are generated from single independent, intermediate query token, such DSIL calls are considered as dependent DSIL calls.

Then, the query plan translator 306 generates a plurality of request pools which contains one or more DSIL calls based on the determined dependencies. For example, the query plan translator 306 arranges dependent DSIL calls into a single request pool so that the DSIL calls can be executed in sequence. The DSIL calls which are not dependent are maintained in separate request pools so that execution of the DSIL calls can be parallelized.

The query plan translator 306 provides the one or more DSIL calls in each of the request pools to the DSIL 308. The DSIL 308 determines whether result set(s) corresponding to one or more DSIL calls in each of the request pools are available in the data cache 214. If the result sets are available, then the DSIL 308 obtains the result set from the data cache 214. It can be noted that, the data cache 214 maintains frequently obtained results sets. This saves significant amount of time required to access the non-relational data stores 108 and also improves performance of the information server 106.

If the result sets are not available, the DSIL 308 uses one or more adapters 310A-N for accessing the non-relational data stores 108 based on the one or more DSIL calls in each request pool. It can be noted that, each of the adapters 310A-N can handle specific types of DSIL calls such as get call, scan call, join call, and filter call. Accordingly, request pool(s) containing specific type of DSIL calls are assigned to the respective adapters 310A-N. Each of the adapters 310A-N generates application programming interface (API) calls corresponding to the one or more DSIL calls in the assigned request pool. Each of the adapters 310A-N accesses the respective non-relational data stores 108 using the generated API calls. That is, each of the adapters 310A-N obtains result sets from the respective non-relational data stores 108 using the generated API calls. Advantageously, execution of API calls is parallelized using the adapters 310A-N in the DSIL 308. Also, additional adapters can be added to the DSIL 308 when new types of non-relational data stores 108 are added to the non-relational data store access system 100.

The DSIL 308 stores the result sets obtained from the one or more non-relational data stores 108 in the data cache 214 for future use. The DSIL 308 arranges the result sets obtained from the data cache 214 and/or the one or more non-relational data stores 108 based on the dependencies between the DSIL calls. In one exemplary implementation, the DSIL 308 maintains the results sets corresponding to independent DSIL calls into different queues while ensuring that the result sets corresponding to the dependent DSIL calls are arranged in the respective single queue. The DSIL 308 provides the results sets in the queues to the result aggregator 312. The result aggregator 312 collates the result sets into a response to the SQL query based on the dependencies between the DSIL calls generated by the query plan translator 306. The result aggregator 312 then provides the response to the SQL query to the DAL 114 of the query module 110. Accordingly, the query module 110 sends the response to the SQL query in the client device 102. In this manner, the query bridge 112 enables a user to access the non-relational data stores 108 such as NoSQL data stores using SQL queries.

In an example, consider that the non-relational data stores 108 stores alarms triggered in an Industrial Plant when change of measured values exceeds or falls below a preset threshold value as shown below.

**Table 1**

| Alarm Message ID | Time Stamp | Type ID |
|---|---|---|
| 1234 | 12/01/2013 10:00AM | 1 |
| 2345 | 02/05/2013 03:23PM | 3 |
| 3456 | 26/09/2013PM | 3 |

**Table 2**

| Type ID | Alarm Type |
|---|---|
| 1 | Temperature |
| 2 | Pressure |
| 3 | Photoelectric |

As shown in Table 1 and Table 2, the non-relational data stores 108 stores type ID, alarm type, time stamp and alarm message ID. Now consider that, user of the client device 102 wishes to obtain number of times a particular alarm is triggered based on values measured by photoelectric sensors in the Industrial Plant. The query module 110 in the information server 106 generates a SQL query to determine count of photoelectric alarms based on user inputs received from the client device 102. Consider that the query module 110 generates an aggregate SQL query.

The query bridge 112 validates the SQL query. Upon successful validation, the query planner 304 generates an optimal query plan, i.e., Get([AlarmMessage.TypeID], consistency). The query plan translator 306 triggers a Get call to obtain all alarm types from the one or more non-relational data stores 108. The respective adapters 310A-N in the DSIL 308 generates API call(s) specific to the one or more non-relational data stores 108 based on the Get call. The respective adapters 310A-N obtains all alarm types from the one or more non-relational data stores 108 using the API call(s). The result aggregator 312 filters the alarm types with type ID '3' as '3' is type ID for photoelectric alarm type. Accordingly, the result aggregator 312 aggregates count for the type ID '3'. Accordingly, the information server 106 provides the count of photoelectric alarms to the client device 102 in response to the SQL query. It can be noted that the information server 106 can also execute other types of SQL query such as join query in the manner described above.

FIG 4 illustrates a block diagram of the query planner 304 of FIG 3, according to an embodiment of the present invention. The query planner 304 includes a cost planner 402, a consistency planner 404, a semantic tokenizer 406, and a query plan generator 408. The cost planner 302 estimates cost of execution of the SQL query. For example, the cost planner 302 evaluates parameters such as schema, estimated result sizes, and physical path associated with location of results and recommends an optimal query plan. The consistency tuner 404 determines degree of consistency required for the SQL query. The degree of consistency is determined based on type of data being accessed from the non-relational data stores 108. For example, the degree of consistency may vary from strong to weak. The degree of consistency is determined as weak when the non-relational data stores 108 are distributed NoSQL data stores. The semantic tokenizer 406 tokenizes the SQL query based the SQL query. The query plan generator 408 generates an optimal query plan using the query tokens based on the degree of consistency and the cost of execution of the SQL query.

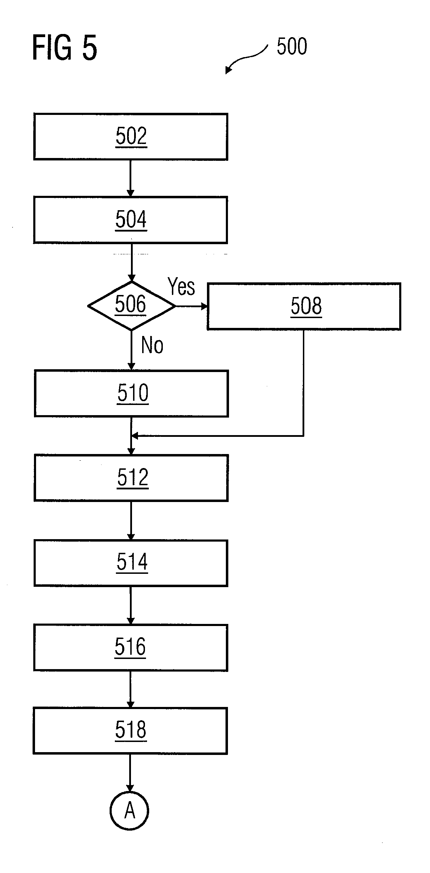

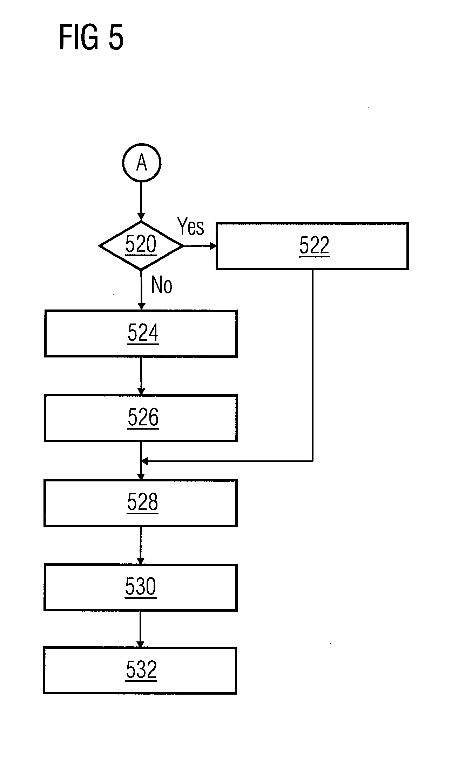

FIG 5 is a process flowchart illustrating an exemplary method of accessing the non-relational data stores 108 using an SQL query, according to an embodiment of the present invention. At step 502, an SQL query is received from a query pool. A query pool with workers that can be assigned to execute queued SQL queries is maintained. The available worker from the query queue provides a SQL query from the query queue. At step 504, the SQL query is parsed. In some embodiments, the SQL query is parsed to perform syntax check on the SQL query. If the SQL query is not valid, then an error message is displayed on the client device 102. If the SQL query is valid, then at step 506, it is determined whether an optimal query plan for the SQL query is available in the plan cache 212. If the optimal query plan is available in the plan cache 212, then at step 508, the optimal query plan for the SQL query is obtained from the plan cache 212 and step 512 is performed.

If the optimal query plan is not available in the plan cache 212, then at step 510, the optimal query plan for the SQL query is generated. At step 512, independent query tokens are identified from the optimal query plan. At step 514, the independent query tokens are translated into a plurality of data store interface layer (DSIL) calls. At step 516, dependencies between the plurality of DSIL calls is determined. At step 518, a plurality of request pools containing one or more DSIL calls is generated based on the determined dependencies.

At step 520, it is determined whether result sets corresponding to any of the DSIL calls in the request pools are available in the data cache 214. If the result sets are available, then at step 522, the result sets are obtained from the data cache 214 and step 530 is performed.

If the result sets are not available, then at step 524, application programming interface (API) calls corresponding to the one or more DSIL calls in each request pool is generated. At step 526, result sets are obtained from the one or more non-relational data stores 108 using the respective API calls. At step 528, the result sets obtained from the one or more non-relational data stores 108 and/or the data cache 214 are arranged in a separate queue such that the result sets which are dependent on each other are maintained in a single queue while the results which are independent of each other are maintained in separate queues. At step 530, the result sets corresponding to the one or more DSIL calls in the queues are collated based on the optimal query plan. At step 532, the collated result sets are provided to the client device 102 in response to the SQL query.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method of accessing non-relational data stores (108) using a structured query language (SQL) query, comprising:
determining, by a processor (202), an optimal query plan for the query;
generating a plurality of data store interface layer calls based on the optimal query plan; and
accessing one or more of the plurality of non-relational data stores (108) based on the plurality of data store interface layer calls.

2. The method according to claim 1, further comprising:
providing results of the query obtained through accessing the one or more non-relational data stores (108).

3. The method according to claim 1 or 2, wherein determining the optimal query plan for the query comprises:
determining whether the optimal query plan for the query is available in a plan cache (212);
obtaining the optimal query plan from the plan cache (212) if the optimal query plan is available in the plan cache (212); and
generating the optimal query plan for the query if the optimal query plan is unavailable in the plan cache (212).

4. The method according to claim 3, wherein generating the optimal query plan for the query comprises:
estimating cost of execution of the query;
determining degree of consistency required for the query; and
generating the optimal query plan for the query based on the cost of execution and the degree of consistency.

5. The method according to any of the preceding claims, wherein generating the plurality of data store interface layer calls based on the optimal query plan comprises:
identifying query tokens from the optimal query plan;
generating the plurality of data store interface layer calls using the identified query tokens;
determining dependencies between the plurality of data store interface layer calls; and
generating a plurality of request pools, each request pool contains one or more data store interface layer calls based on the determined dependencies.

6. The method according to any of the preceding claims, wherein accessing the one or more non-relational data stores (108) comprises:
generating application programming interface (API) calls corresponding to the one or more data store interface layer calls in each request pool, wherein each of the API calls is specific to anyone of the one or more non-relational data stores (108); and
accessing the one or more non-relational data stores (108) using the respective API calls.

7. The method according to claim 6, wherein accessing the one or more non-relational data stores (108) using the respective API calls comprises:
obtaining result sets from the one or more non-relational data stores (108) using the respective API calls.

8. The method according to claim 2 or 7, wherein providing the results of the query obtained through accessing the one or more non-relational data stores (108) comprises:
collating the result sets corresponding to the one or more data store interface layer calls in the plurality of request pools based on the optimal query plan; and
providing the collated result sets in response to the SQL query.

9. An apparatus (106) comprising:
a processor (202); and
a memory (204) coupled to the processor (202), wherein the memory (204) is provided with a query bridge (112) comprising:
a query planner (304) configured for determining an optimal query plan for a structured query language (SQL) query;
a query plan translator (306) configured for generating a plurality of data store interface layer calls based on the optimal query plan; and
a data store interface layer (308) configured for accessing one or more non-relational data stores (108) based on the plurality of data store interface layer calls.

10. The apparatus (106) according to claim 9, wherein the query bridge (112) comprises a query parser (302) configured for validating the query by parsing the query.

11. The apparatus (106) according to claim 9 or 10, wherein the query planner (304) is configured for:
determining whether the optimal query plan for the query is available in a plan cache (212);
obtaining the optimal query plan from the plan cache (212) if the optimal query plan is available in the plan cache (212); and
generating the optimal query plan for the query if the optimal query plan is unavailable in the plan cache (214).

12. The apparatus (106) according to any of the claims 9 to 11, wherein the query plan translator (306) is configured for:
identifying query tokens from the optimal query plan;
generating the plurality of data store interface layer calls using the identified query tokens;
determining dependencies between the plurality of data store interface layer calls; and
generating a plurality of request pools, each request pool contains one or more data store interface layer calls based on the determined dependencies.

13. The apparatus (106) according to claim 12, wherein the data store interface layer (308) is configured for:
generating application programming interface (API) calls corresponding to the one or more data store interface layer calls in each request pool, wherein each of the API calls is specific to anyone of the one or more non-relational data stores (108); and
obtaining result sets from the one or more non-relational data stores (108) using the respective API calls.

14. The apparatus (106) according to any of the claims 9 to 13, wherein the query bridge comprises a result aggregator (312) configured for:
collating the result sets corresponding to the one or more data store interface layer calls in the plurality of request pools based on the optimal query plan; and
providing the collated result sets in response to the SQL query.
